# EUROPÄISCHE PATENTSCHRIFT

(11) **EP 3 999 728 B1**
(45) Veröffentlichungstag und Bekanntmachung des Hinweises auf die Patenterteilung: **14.02.2024**
(21) Anmeldenummer: 20744004.1
(22) Anmeldetag: 16.07.2020
(51) Int. Cl.: F01N 13/14, F01N 13/18

(54) **ABSCHIRMTEIL**
SHIELDING ELEMENT
DISPOSITIF DE BLINDAGE

(30) Priorität: 16.07.2019 DE 102019119294
(43) Veröffentlichungstag der Anmeldung: 25.05.2022
(73) Patentinhaber: ElringKlinger AG, 72581 Dettingen/Erms (DE)
(72) Erfinder: HUBERT, Andreas, 72851 Dettingen/Erms (DE); SCHÖLZEL, Peter, 72581 Dettingen/Erms (DE)
(74) Vertreter: Schmidt, Axel
(86) Internationale Anmeldenummer: PCT/EP2020/070234
(87) Internationale Veröffentlichungsnummer: WO 2021/009329

(56) Entgegenhaltungen:
- DE-A1- 19 602 287
- DE-C2- 19 602 287
- US-A- 4 456 457
- US-A- 4 979 364
- US-A1- 2008 169 038
- US-A1- 2013 259 754

## Beschreibung

Die vorliegende Erfindung betrifft ein Abschirmteil, das mindestens zwei Teilstücke umfasst, die dazu ausgebildet sind, an mindestens einer Trennfläche aneinander anstoßend miteinander verbunden zu werden, um in einem Einsatzfall ein dreidimensional geformtes Rohrstück eines Abgasstrangs einer Verbrennungskraftmaschine über eine Länge hinweg zu umschlie-ßen.

Aus dem Stand der Technik sind diverse Ansätze dazu bekannt, um ein Abschirmteil als geschlossene Ummantelung oder Umfassung um ein Profil herum anzuordnen. Neben einer Verwendung von geschlitzten Hülsen und segmentierten Abschirmteilen in Form von Halb- oder Teilschalen hat sich insbesondere ein Abschirmteil gemäß der EP 1 702 803 B1 gewährt, auf deren Offenbarung hiermit verwiesen wird. Durch ein derartig aufgebautes Abschirmteil werden vergleichsweise heiße Zonen eines Abgasstrangs - vorzugsweise im Nahbereich einer Verbrennungskraftmaschine - gegenüber benachbarten Abschnitten und/oder Aggregaten thermisch abgeschirmt. Auch von einem Kreis abweichende Querschnittskonturen können schnell und prozesssicher in einem Montageschritt umschlossen werden.

Der ungebrochen fortschreitende Trend zum Kompaktbau von Kraftfahrzeugantrieben mit Verbrennungskraftmaschinen schafft für ein derartiges Abschirmteil von einem bis auf ca. 1.100°C hoch erhitzten Krümmer über Turbolader bis zu Katalysatoren hin bevorzugte Einsatzfelder entlang diverser Abschnitte eines Abgasstranges. Dabei zeichnet sich ein Abschirmteil der genannten Art sehr vorteilhaft beim Einbau in der Fertigung sowie bei Reparaturen bei geringem Eigengewicht durch eine gute Handhabbarkeit bei nur sehr geringem Einsatz von Werkzeugen oder sonstigen Hilfsmitteln aus.

Dazu ist auch bekannt, ein Abschirmteil insbesondere durch eine Ausgestaltung einer äußeren Oberfläche und/oder eine innere Struktur und Material einer Füllung alternativ oder zusätzlich zu der thermischen Dämmung zur Bedämpfung einer akustischen Abstrahlung auszubilden. Das Abschirmteil dient dann alternativ oder zusätzlich zur Minderung einer Geräuschbelastung, z.B. durch eine gewellte und/oder genoppte äußere Oberfläche. Nachfolgend wird nicht weiter zwischen einem Abschirmteil mit thermischer und/oder akustischer Dämmung unterschieden. Die Publikationen US 4 456 457 A, DE 196 02 287 A1, US 2013/259754 A1, US 2008/169038 A1 oder US 4 979 364 A offenbaren Abschirmteile für Abgasstränge von Verbrennungskraftmaschinen.

Die vorliegende Erfindung hat das Ziel, ein Abschirmteil der genannten Art unter Steigerung seiner Wirkung mit weiteren positiven Eigenschaften weiterzubilden.

Diese Aufgabe wird erfindungsgemäß durch die Merkmale von Anspruch 1 dadurch gelöst, dass die Teilstücke des Abschirmteils jeweils mindestens ein in einer Einbaulage auf das zu umschließende Rohrstück thermisch nach innen auf das zu umschließende Rohrstück hin gerichtetes elektrisches Heizsystem umfassen. Ein bereits bekanntes und als fertiges Bauteil an einem Abgasstrang eingesetztes Abschirmteil wird erfindungsgemäß so um die Möglichkeit einer gezielten Beheizbarkeit in einem Bereich erweitert, der ein Heizsystem aufweist. Während bekannte Abschirmteile nur eine Abstrahlung von Wärme und/oder Schall dämmen konnten, wird durch ein bekanntes und i.d.R. bereits vorhandenes Bauteil erfindungsgemäß zusätzlich die Möglichkeit geschaffen, ein Rohrstück in einem durch ein Heizsystem definierten Bereich gezielt um das Rohrstück von seiner Querschnittsform unabhängig außen umschließend gezielt zu beheizen. In einer dem Fachmann geläufigen Weise ist eine Beheizung unter Versorgung aus einem Bord-Netz leicht elektrisch regelbar, so dass eine gewünschte Temperatur sicher einstellbar ist. Durch diese Kombination ergibt sich ein vorteilhafter Verbund aus einem dämmenden Abschirmteil und einer darin vorgesehenen elektrischen Heizung.

Vorteilhafte Weiterbildungen sind Gegenstand der abhängigen Ansprüche. Demnach sind zwei Teilstücke miteinander über mindestens eine Biegelinie verbunden. Dadurch kann eine Montage wesentlich vereinfacht werden, da eine Anzahl der Teilstücke gesenkt und deren Orientierung zueinander auch in der Montage schon klar erkennbar vorgegeben ist.

In einer bevorzugten Ausführungsform der Erfindung ist die Biegelinie in dem Abschirmteil als Omega-förmige Sicke ausgeführt. Neben einem geringen mechanischen Widerstand beim Schließen des Abschirmteils in der Montage schafft eine derartige Sicke zusätzlichen Raum, um z.B. elektrische Zuleitungen des elektrisches Heizsystems sicher aufzunehmen und auch geschützt zu führen.

Nach einer wesentlichen Weiterbildung der Erfindung ist das Heizsystem als elektrisch gegenüber dem Profil isolierter Widerstandsleiter ausgebildet und mit einem sich über eine Länge erstreckenden mäandernden Verlauf versehen. Drähte weisen gegenüber anderen leitfähigen Strukturen, wie z.B. Flächenleitern oder Leiter-Netzen i.d.R. den Vorteil guter Verformbarkeit bei Ausbildung einer 3D-Strutur auf. Durch einen mäandernden Verlauf eines Heizdrahtes wird eine Homogenisierung einer Wärmeeinleitung und damit eine möglichst gleichmäßige Verteilung über einer Fläche erzielt, durch die die Verformbarkeit der Struktur nur unwesentlich beeinflusst wird.

Vorzugsweise ist der Widerstandsleiter mit einer elektrischen Isolierung umschlossen. Damit ist ein elektrischer Kurzschluss über das Rohrstück auch in dem Fall ausgeschlossen, dass der Widerstandsleiter zur Verbesserung einer Wärmeübertragung direkt auf eine Oberfläche der i.d.R. metallischen Rohrstücks angeordnet ist.

Diese Isolierung des Widerstandsleiters ist in einer Weiterbildung der Erfindung in Form eines Geflechtes, Gewirkes, Gewebes oder Gestricks ausgebildet. Für die Isolierung sind Fasern eines elektrisch gut isolierenden Materials oder einer Mischung thermischer Hochleistungsmaterialien bei 0,1 bis 0,6 mm Stärke vorgesehen. Alternativ oder zusätzlich ist die elektrische Isolierung der Widerstandsleiter als keramische Beschichtung ausgebildet, insbesondere als durch Tauchen in eine Emulsion oder Besprühen gebildete und nachfolgend thermisch verfestigte Beschichtung.

Der Widerstandsleiter ist zusammen mit einer angeschlossenen elektrischen Energieversorgung dafür auszulegen, dass er durch die elektrische Isolierung hindurch ein angrenzendes Rohr als Teil eines Abgasstrangs auf ca. 200° bis auf mehr als 550°C erwärmen kann. Damit kann ein durch dieses Rohr geführtes Abgas auch auf eine Temperatur erwärmt werden, die über einer Grenztemperatur liegt, ab der ein stromabwärts nachfolgend angeordneter Katalysator auf bei einem Kaltstart der Verbrennungskraftmaschine effektiv arbeiten kann. Damit können auch strenge Emissions-Grenzwerte eingehalten werden.

Vorzugsweise ist das Heizsystem des Teilstücks in oder an einer thermischen Dämmung des Abschirmteils fixiert, wobei die Dämmung in einer einem zu umschließenden Rohrstück entgegengesetzten Richtung bzw. nach außen hin thermisch schlecht wärmeleitende Fasern umfasst, insbesondere Matten aus Glas- und/oder Keramikfasern. Damit wird ein Wärmefluss aus dem Heizsystem zu dem zu erwärmenden Rohrstück hin verbessert.

In einer bevorzugten Ausführungsform der Erfindung ist die Fixierung des Heizsystems durch Vernähen, Vernadeln und/oder Tackern eines Heizsystems in, an oder mit dem faserigen Material der thermischen Dämmung realisiert.

Vorteilhafterweise ist mindestens ein Zweig der elektrischen Beheizung in einer von mehreren gelenkig miteinander verbundenen Teilschalen der Abschirmvorrichtung fixiert. In einer Einbaulage umschließt das elektrisches Heizsystem den jeweiligen Abschnitt des Abgasstrangs, ohne dass das Heizsystem um diesen Abschnitt herum aufgewickelt sein müsste. Als einstückiger Teil eines Abschirmteils wird der elektrisch isolierte Widerstandsleiter einfach um das betreffende Rohrstück herum durch das Abschirmteil gehalten und verschlossen.

Gemäß einer Weiterbildung der Erfindung sind mehrere Heizsysteme eines Teilstücks des Abschirmteils und/oder innerhalb eines jeden Heizsystems Kaskadierungen einer jeweiligen Wärmeleistung vorgesehen. Diese Kaskadierungen der Wärmeleistung sind durch abschaltbare Heizsysteme in einem Teilstück des Abschirmteils und/oder abschaltbare Widerstandszweige innerhalb eines Heizsystems realisiert.

In einer Ausführungsform der Erfindung sind zum Einstellen einer jeweils abzugebenden Heizleistung Mittel zum Schalten und zur Regelung eines Stromflusses durch das elektrische Heizsystem vorgesehen, insbesondere elektronische Schalter zur Herstellung einer Pulsweiten-Modulation des Stroms durch ausgewählte Zweige des elektrischen Heizsystems.

Erfindungsgemäß ist eine elektrische Beheizung in eine Abschirmvorrichtung einstückig so einzubetten, dass sie an einem Abschnitt eines Abgasstrangs sicher und einfach angeordnet und auch nachgerüstet werden kann. Ein derartiges Abschirmteil ist unter Verwendung einer thermischen Dämm-Manschette so aufgebaut, dass für das elektrische Heizsystem in einer Einbaulage ein guter thermischer Kontakt bei ausreichender elektrischer Isolation zu dem betreffenden Abschnitt des Abgasstrangs hergestellt ist. Damit sind in einfacher und zuverlässiger Weise Konfigurationen realisierbar, wie z.B. in der DE 10 2018 117 049 A1 offenbart.

Nachfolgend werden weitere Merkmale und Vorteile erfindungsgemäßer Ausführungsformen unter Bezugnahme auf Ausführungsbeispiele anhand der Zeichnung näher erläutert. Darin zeigen in schematischer Darstellung:
- Figur 1:: eine in einer Ebene A-A geschnittene perspektivische Darstellung eines Abschirmteils in einer Einbaulage;
- Figur 2:: eine Vergrößerung eines Ausschnitts AA von Figur 1;
- Figur 3:: eine Vergrößerung eines weiteren Ausschnitts BB von Figur 1 und
- Figur 4:: eine perspektivische Darstellung eines aus dem Stand der Technik bekannten Abschnitts eines Abgasstranges einer Diesel-Brennkraftmaschine in Kompakt-Bauweise mit der Schnittebene A-A für die Darstellung einer Ausführungsform des Abschirmteils in Figur 1.

Über die verschiedenen Abbildungen hinweg werden für gleiche Elemente stets die gleichen Bezugszeichen verwendet. Ohne Beschränkung der Erfindung wird nachfolgend nur ein Einsatz erfindungsgemäßer Abschirmteile als Teil eines Abgasstranges einer Diesel-Brennkraftmaschine eines Kraftfahrzeugs dargestellt und beschrieben. Es ist aber für den Fachmann offensichtlich, dass in gleicher Weise auch eine Anpassung auf andere Anwendungsfälle mit vorteilhaft geregelter Temperaturführung über ein umschlossenes geformtes Rohrstück oder Bauteil möglich ist, insbesondere in einem Abgasstrang einer Otto-Brennkraftmaschine, oder aber Teilbereichen alternativer Antriebe und sonstiger Anwendungsfälle, bei denen eine Solltemperatur binnen sehr kurzer Zeit erreicht und/oder gehalten werden muss und zugleich eine Dämmung gegenüber einer jeweiligen Umgebung vorzusehen ist.

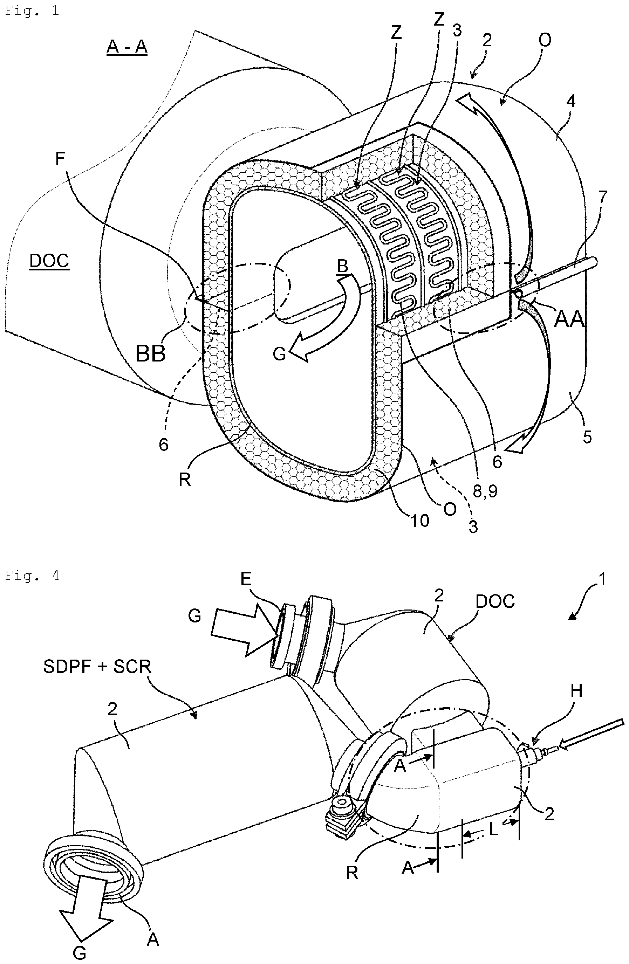

Figur 4 zeigt in vereinfachter Darstellung eine perspektivische Ansicht eines aus dem Stand der Technik bekannten Abschnitts eines Abgasstranges 1 einer Diesel-Brennkraftmaschine in Kompakt-Bauweise, wie sie z.B. derzeit für eine 2,0 l-Diesel-Verbrennungskraftmaschine nach EURO 6-Norm in Personenkraftfahrzeugen eingesetzt werden. Dieser Abschnitt ist zum thermischen Schutz benachbarter Aggregate sowie zur Senkung einer Schallabstrahlung bereits vollständig mit Abschirmteilen 2 umschlossen, deren sichtbare äußeren Oberflächen O zur Minderung einer Schallabstrahlung in nicht weiter dargestellter Weise strukturiert sind. In Fließrichtung eines Abgasstroms G werden in dem dargestellten Abschnitt des Abgasstranges 1 zwischen einem Eingang E und einem Ausgang A als Systemgrenzen nacheinander ein Diesel-Oxidationskatalysator DOC, eine Harnstoffeinspritzung H mit entsprechender Mess-Sensorik und anschließender Mischstrecke in einem Rohrstück R, sowie eine Kombination aus einem mit einem selektiv reduzierendem Katalysator beschichteten Dieselpartikelfilter SDPF und einem selektiv reduzierendem Katalysator SCR auf engstem Raum durchlaufen.

Es hat sich im Rahmen von Versuchen überraschend deutlich herausgestellt, dass dem hier von einer gestrichelten Linie umschlossenen Rohrstück R bzw. Mischstrecke als Träger der Harnstoffeinspritzung H besondere Bedeutung bei der Senkung eines Schadstoffausstoßes zukommt, insbesondere bei einem Kaltstart des Kraftfahrzeugs. Dem Diesel-Oxidationskatalysator DOC nachgeschaltet und dem mit einem selektiv reduzierenden Katalysator beschichteten Dieselpartikelfilter SDPF vorgelagert wird nun ein Abschnitt dieses Rohrstücks R nur außen über eine bestimmte Länge L mit mindestens einem elektrischen Heizsystem 3 versehen, um einen Abgas-Strom G auf eine für eine anschließende Entstickung unter Umsetzung von Harnstoff erforderliche Mindesttemperatur von ca. 200°C zu bringen. Damit wird jede Änderung innerhalb des dargestellten Abgasstrangs oder auch nur eines Teilstücks daraus vermieden. Die neue Funktionalität der gezielten Beheizbarkeit ist in das bereits vorhandene Abschirmteil 2 hinein verlagert worden.

Figur 1 zeigt eine geschnittene perspektivische Darstellung eines Ausführungsbeispiels eines dementsprechend erweiterten Abschirmteils 2 in einer Einbaulage als vergrößerten Ausschnitt von Figur 4. Um das Rohrstück R mit deutlich von einer Kreisform abweichenden Querschnittkontur in einer für eine Massenfertigung tauglichen Art und Weise mit dem dämmenden Abschirmteil 2 zu umschließen ist das Abschirmteil 2 hier aus zwei Teilstücken 4, 5 gebildet, die als Halbschalen miteinander verbunden sind und jeweils ein elektrisches Heizsystem 3 tragen. Diese Teilstücke 4, 5 sind so geformt, dass sie in dem dargestellten Einsatzfall an Trennflächen 6 aneinander anstoßend miteinander verbunden das dreidimensional geformte Rohrstück R vollständig umschließen. Damit umschließt dann auch eine den Teilstücken 4, 5 entsprechende Anzahl von Heizsystemen 3 das Rohrstück R, ohne dass das Rohrstück R z.B. mit einem Widerstandsdraht etc. umwickelt werden müsste. Ein Umwickeln des Rohrstücks R wäre an einer Außenseite nicht prozesssicher und in akzeptabler Fertigungszeit realisierbar. Ein innerer Einbau scheidet als Eingriff in ein bestehendes und aufeinander abgestimmte Komponenten diverser Hersteller umfassendes System aus. Ohne Eingriffe in das beschriebene System unterscheidet sich das Anbringen von Heizsysteme 3 tragenden Teilstücken 4, 5 dieses Ausführungsbeispiels eines Abschirmteils 2 nicht von einer bislang bekannten Montage eines dämmenden Abschirmteils 2 an dem Abschirmstrang 1.

Bei dem Abschirmteil 2 von Figur 1 läuft die äußere Oberfläche O des Abschirmteils 2 im Bereich einer der beiden Trennflächen 6 in eine Biegelinie 7 aus, über die die Halbschalen-Teilstücke 4, 5 miteinander durch eine als Scharnier dienende Omega-förmige Sicke 7 gelenkig verbunden sind. Die Sicke 7 zeichnet sich durch einen geringen mechanischen Biege-Widerstand beim Schließen des Abschirmteils 2 um das Rohrstück R in der Montage aus und schafft zusätzlichen Raum, um z.B. elektrischen Zuleitungen der Heizsysteme 3 sicher aufzunehmen und auch geschützt zu führen, was hier nicht weiter zeichnerisch dargestellt ist. Der Sicke 7 gegenüberliegend ist in einem Bereich der Trennfläche 6 an der äußeren Oberfläche O ein Flansch F zur sicheren Fixierung des Abschirmteil 2 in um das Rohrstück R herum geschlossenem Zustand ausgebildet.

Die Trennflächen 6 liegen in diesem Ausführungsbeispiel alle in einer Ebene, die auch mittig durch Ein- und Auslassbereiche B des Rohrstücks R verläuft. Diese Ebene bildet damit eine Spiegelebene des Abschirmteils 2, die Teilstücke 4, 5 sind in dem dargestellten Sonderfall also zueinander spiegelbildlich als Halbschalen ausgebildet.

Jedes der Halbschalen-Teilstücke 4, 5 umfasst mehrere Zweige Z als separat schaltbare Teile des elektrischen Heizsystems 3, das in einer fertig eingerichteten Einbaulage zur intensiven Wärmeeinleitung auf das zu umschließende Profil bzw. das Rohrstück R hin ausgerichtet ist. Jeder Zweig Z des Heizsystem 3 umfasst mindestens einen elektrisch gegenüber dem Rohrstück R isolierten Widerstandsleiter 8 mit einem sich über eine Länge L in Fließrichtung des Abgasstroms G erstreckenden Teil oder Abschnitt mit mäandernden Verlauf. Der Widerstandsleiter 8 ist dazu mit einer elektrischen Isolierung 9 in Form eines Geflechts umschlossen, das aus einer temperaturbeständigen Glas- und/oder Keramikfaser besteht. Zur Verbesserung eines Wärmeübergangs von dem Widerstandsleiter 8 in das Rohrstück R hinein ist die elektrischen Isolierung 9 so dünn als möglich gewählt.

Um eine Verschiebung auch nur von Teilbereichen des Widerstandsleiters 8 oder von Teilen eines Zweiges Z dauerhaft zu unterbinden ist das Heizsystem 3 bzw. dessen Zeige in den Teilstücken 4, 5 in und/oder an einer thermischen Dämmung 10 des Abschirmteils 2 fixiert. Die Fixierung des Heizsystems 3 ist durch Vernähen, Vernadeln und/oder Tackern in und/oder an der thermischen Dämmung 10 des Teilstücks 4, 5 des Abschirmteils 2 gebildet. Der Widerstandsleiter 8 wird in einem Ausführungsbeispiel auf der thermischen Dämmung 10 liegend entlang seiner Mittelachse von einer Naht überdeckt bzw. quasi übernäht. In einem weiteren Ausführungsbeispiel ist auch ein punktuelles Übernähen ausreichend, so dass eine Naht im Wesentlichen senkrecht zu dem mäandernden Verlauf des Widerstandsleiters 8 liegt. Durch eine aus Fasern bestehende elektrische Isolierung 9 des Widerstandsleiters 8 reicht aber auch eine indirekte Fixierung des Widerstandsleiters 8 durch eine Fixierung der aus Fasern bestehenden Isolierung 9 an der thermischen Dämmung 10 aus, z.B. durch eine Art von Verfilzung. Gerade bei der Schaffung einer Dämmung in Form eines auch mechanisch belastbaren Formteils wird in einer nicht weiter dargestellten Ausführungsform so vorgegangen, dass die thermische Dämmung 10 mit dem mindestens einen Widerstandsleiter 8 mit Faser-Isolierung 9 gemeinsam mit einer Emulsion bei 0,1 bis 0,6 mm Stärke der Isolationsschicht benetzt und über eine an eine Formgebung anschließende Temperierung gebildete keramische Struktur miteinander verbunden werden.

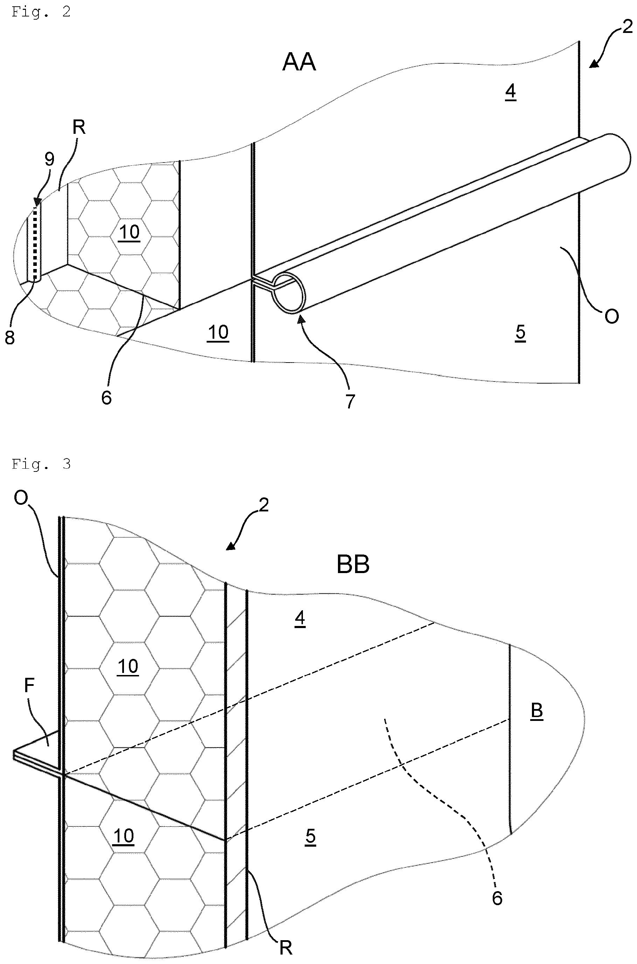

Figur 2 stellt eine Vergrößerung eines Ausschnitts AA von Figur 1 dar. In den Abbildungen der Figuren 1 und 2 ist ein schematischer Aufbau als einteiliges Abschirmteil 2 mit angrenzenden Zweigen Z des Heizsystems 3 dargestellt, die über die Omega-Sicke 7 miteinander gelenkig verbunden sind. Durch ihre Konstruktion erzwingt die Omega-Sicke 7 die Ausbildung einer Stoßfuge der beiden Teile der thermischen Dämmung 10 und schließt damit eine sonst mögliche Wärmesenke. Zugleich schafft die Omega-Sicke 7 einen Raum, in dem hier nicht weiter dargestellte Zuleitungen zu den jeweiligen Zweigen Z zumindest des zugehörigen Heizsystems 3 umschlossen und sicher geführt sind.

Dieser Omega-Sicke 7 gegenüber befindet sich im verbauten Zustand eine weitere Trennfläche 6. Diese Trennfläche 6 ist nach einem Verbau in der Fertigung um das Rohrstück R herum geschlossen und z.B. durch Schweißen, Durchsatzfügen, Klammern, Kleben o.ä. mechanisch dauerhaft verbunden.

Figur 3 zeigt eine Vergrößerung BB eines weiteren Ausschnitts von Figur 1. Diese Anordnung kann aber auch in einem ein zwei- und mehrteiligen Schalensystem verwendet werden, bei welchem benachbarte Trennflächen 6 an der äußeren Oberfläche O flach auslaufend im Anschluss an den Zusammenbau als Flansche F ebenfalls mechanisch in vorstehend angegebener Art und Weise dauerhaft verbunden werden.

Ein vorstehend beschriebenes Abschirmteil 2 kann für Anwendungstemperaturen von bis zu 900°C und bei Bedarf zumindest kurzfristig auch darüber hinaus bis ca. 1.500°C ausgelegt werden. Das integrierte Heizsystem 3 weist in dem beschriebenen Ausführungsbeispiel eine elektrische Heizleistung von ca. 1,5 kW bis 5 kW bei 12 V oder 48 V Versorgungsspannung auf. Das Abschirmteil 2 kann bezüglich seiner Querschnittsfläche eine weitestgehend freie Form bei Durchmessern von 20 mm bis 500 mm aufweisen. Eine zu beheizende Gesamtlänge L sollte < 1.000 mm betragen. Eine thermische Dämmung 10 weist einen Schichtmächtigkeit von ca. 5 mm auf und wird von einer metallischen Außenfläche aus Edelstahl oder Aluminium mit etwa 0,4 mm Dicke umschlossen. Die metallische Außenfläche ist mit einer geprägten Struktur zur Einstellung einer besonderen akustischen Eigenschaft versehen.

In der Regel wird ein erfindungsgemäßes System in einer symmetrischen Anordnung mehrteilig angebracht. Dies ist beispielsweise durch Teilschalen möglich, wie vorstehend beschrieben. Neben Lösung über zwei separate Halbschalen ist in einigen Anwendungsfällen auch eine einteilige Lösung realisierbar, die mehr als zwei Teilschalen jenseits der Trennfläche 6 z.B. über mehrere Omega-Sicken miteinander nach Art eines Gelenks oder Scharniers gemäß der Lehre der EP 1 702 803 B1 im Wesentlichen gerade oder auch linienförmig und bei nur geringer Formabweichung verbindet.

Über einen gesamten Abgasstrang 1 hinweg sind damit bei einfacher Montage verschiedene Bereiche vor und/oder um Katalysatoren herum getrennt und unabhängig voneinander regelbar elektrisch beheizbar. Diese Montage kann in aufeinander folgenden Abschnitten erfolgen, die dann in bekannter Weise miteinander verbunden werden, i.d.R. durch Schellen zur Fixierung auch an einem Fahrzeug-Unterboden. Diese Nachrüstung kann auch bei einem bereits bestehenden Abgasstrang vorgenommen werden und macht bei vorteilhafterweise fast unveränderter Montage an dem Abgasstrang selber keine baulichen Veränderungen in dem Abgasstrang erforderlich. Extern sind in diesen Ausführungsbeispielen lediglich Schalt- und Regelelemente zur Einstellung und Regelung einer jeweils zuzuführenden elektrischen Energie und deren Verteilung auf Zweige Z mit ohmschen Heizwiderständen oder Heizdrähten vorzusehen.

### Bezugszeichenliste

- 1: Abgasstrang
- 2: Abschirmteil
- 3: Heizsystem
- 4: Teilstück
- 5: Teilstück
- 6: Trennfläche
- 7: Biegelinie (Omega-förmige Sicke)
- 8: Widerstandsleiter
- 9: elektrische Isolierung
- 10: thermische Dämmung

- A: Ausgang
- B: Ein- und Auslassbereiche des Rohrstücks R
- E: Eingang
- F: Flansch
- G: Abgasstroms
- H: Harnstoffeinspritzung
- L: Länge eines Heizsystems in Abgasstroms- Fließrichtung
- O: äußere Oberfläche eines Abschirmteils 2
- R: Rohrstück

## Patentansprüche

1. Abschirmteil (2), das mindestens zwei Teilstücke (4, 5) umfasst, die dazu ausgebildet sind, an mindestens einer Trennfläche (6) aneinander anstoßend miteinander verbunden zu werden, um in einem Einsatzfall ein dreidimensional geformtes Rohrstück (R) eines Abgasstrangs (1) einer Verbrennungskraftmaschine über eine Länge hinweg zu umschließen,
**dadurch gekennzeichnet, dass**
die Teilstücke (4, 5) des Abschirmteils (2) jeweils mindestens ein in einer Einbaulage auf das außen zu umschließende Rohrstück (R) thermisch nach innen auf das zu umschließende Rohrstück (R) hin gerichtetes elektrisches Heizsystem (3) umfassen.

2. Abschirmteil nach dem vorhergehenden Anspruch, **dadurch gekennzeichnet, dass** zwei Teilstücke (4, 5) miteinander über mindestens eine Biegelinie (7) verbunden sind.

3. Abschirmteil nach dem vorhergehenden Anspruch, **dadurch gekennzeichnet, dass** die Biegelinie (7) als Omega-förmige Sicke ausgeführt ist.

4. Abschirmteil nach einem der vorhergehenden Ansprüche, **dadurch gekennzeichnet, dass** das Heizsystem (3) als mindestens ein elektrisch gegenüber dem Rohrstück (R) isolierter Widerstandsleiter (8) mit einem sich über eine Länge (L) in Abgas-Fließrichtung erstreckenden mäandernden Verlauf ausgebildet ist.

5. Abschirmteil nach dem vorhergehenden Anspruch, **dadurch gekennzeichnet, dass** der Widerstandsleiter (8) mit einer elektrischen Isolierung (9) versehen ist.

6. Abschirmteil nach dem vorhergehenden Anspruch, **dadurch gekennzeichnet, dass** die elektrische Isolierung (9) des Widerstandsleiters (8) in Form eines Gewirkes, Gewebes, Geflechts oder Stricks ausgebildet ist.

7. Abschirmteil nach einem der beiden vorhergehenden Ansprüche, **dadurch gekennzeichnet, dass** für die elektrische Isolierung (9) des Widerstandsleiters (8) Fasern aus Gläsern, Silikaten oder einer Mischung thermischer Hochleistungsmaterialien bei ca. 0,1 bis etwa 0,6 mm Stärke der Isolationsschicht vorgesehen sind.

8. Abschirmteil nach einem der vorhergehenden Ansprüche, **dadurch gekennzeichnet, dass** der Widerstandsleiter (8) zusammen mit einer angeschlossenen elektrischen Energieversorgung dazu ausgebildet ist, durch eine elektrische Isolierung (9) hindurch ein angrenzendes Rohrstück (R) als Teil eines Abgasstrangs auf ca. 200° bis auf mehr als 550°C zu erwärmen.

9. Abschirmteil nach einem der vorhergehenden Ansprüche, **dadurch gekennzeichnet, dass** das Heizsystem (3) des Teilstücks (4, 5) in und/oder an einer thermischen Dämmung (10) des Abschirmteils (2) fixiert ist.

10. Abschirmteil nach dem vorhergehenden Anspruch, **dadurch gekennzeichnet, dass** die Fixierung des Heizsystems (3) in und/oder an einer thermischen Dämmung (10) des Teilstücks (4, 5) des Abschirmteils (2) durch Vernähen, Vernadeln und/oder Tackern gebildet ist.

11. Abschirmteil nach einem der vorhergehenden Ansprüche, **dadurch gekennzeichnet, dass** mindestens ein Zweig (Z) des elektrischen Heizsystems (3) in einer von mehreren gelenkig miteinander verbundenen Teilschalen der Abschirmvorrichtung fixiert ist.

12. Abschirmteil nach einem der vorhergehenden Ansprüche, **dadurch gekennzeichnet, dass** mehrere Heizsysteme (3) eines Teilstücks (4, 5) des Abschirmteils (2) und/oder innerhalb eines jeden Heizsystems (3) eine Kaskadierung einer jeweiligen Wärmeleistung durch abschaltbare Heizsysteme (3) und/oder abschaltbare Zweige (Z) der Heizsysteme (3) vorgesehen ist.

13. Abschirmteil nach einem der vorhergehenden Ansprüche, **dadurch gekennzeichnet, dass** zum Einstellen einer jeweils abzugebenden Heizleistung Mittel zum Schalten und zur Regelung eines Stromflusses durch das elektrische Heizsystem (3) vorgesehen sind.

14. Abschirmteil nach einem der vorhergehenden Ansprüche, **dadurch gekennzeichnet, dass** im Bereich einer Trennfläche (6) an der äußeren Oberfläche (O) ein Flansch (F) zur sicheren Fixierung des Abschirmteils (2) in um das Rohrstück (R) herum geschlossenem Zustand des Abschirmteil (2) ausgebildet ist.

## Claims

1. Shielding element (2) comprising at least two sections (4, 5) which are designed to be joined together in abutting relationship at at least one separating surface (6) in order to enclose a three-dimensionally shaped pipe section (R) of an exhaust gas train (1) of an internal combustion engine over a length in an application,
**characterised in that**
the sections (4, 5) of the shielding element (2) each comprise at least one electrical heating system (3) which, in an installation position on the pipe section (R) to be enclosed on the outside, is directed thermally inwards towards the pipe section (R) to be enclosed.

2. Shielding element according to the preceding claim, **characterised in that** two sections (4, 5) are connected to each other via at least one bending line (7).

3. Shielding element according to the preceding claim, **characterised in that** the bending line (7) is designed as an omega-shaped bead.

4. Shielding element according to one of the preceding claims, **characterised in that** the heating system (3) is formed as at least one resistance conductor (8) which is electrically insulated from the pipe section (R) and has a meandering course extending over a length (L) in the direction of exhaust gas flow.

5. Shielding element according to the preceding claim, **characterised in that** the resistance conductor (8) is provided with an electrical insulation (9).

6. Shielding element according to the preceding claim, **characterised in that** the electrical insulation (9) of the resistance conductor (8) is in the form of a knitted fabric, woven fabric, braid or rope.

7. Shielding element according to one of the two preceding claims, **characterised in that** fibres made of glasses, silicates or a mixture of high-performance thermal materials with a thickness of approx. 0.1 mm to approx. 0.6 mm of the insulation layer are provided for the electrical insulation (9) of the resistance conductor (8).

8. Shielding element according to one of the preceding claims, **characterised in that** the resistance conductor (8) together with a connected electrical power supply is designed to heat an adjacent pipe section (R) through an electrical insulation (9) as part of an exhaust gas line to approx. 200° to more than 550°C.

9. Shielding element according to one of the preceding claims, **characterised in that** the heating system (3) of the section (4, 5) is fixed in and/or on a thermal insulation (10) of the shielding element (2).

10. Shielding element according to the preceding claim, **characterised in that** the fixing of the heating system (3) in and/or on a thermal insulation (10) of the section (4, 5) of the shielding element (2) is formed by sewing, needling and/or stapling.

11. Shielding element according to one of the preceding claims, **characterised in that** at least one branch (Z) of the electrical heating system (3) is fixed in one of several hingedly interconnected partial shells of the shielding device.

12. Shielding element according to one of the preceding claims, **characterised in that** several heating systems (3) of a section (4, 5) of the shielding element (2) and/or within each heating system (3) a cascading of a respective heat output is provided by heating systems (3) which can be switched off and/or branches (Z) of the heating systems (3) which can be switched off.

13. Shielding element according to one of the preceding claims, **characterised in that** means for switching and regulating a current flow through the electrical heating system (3) are provided for setting a heating power to be emitted in each case.

14. Shielding element according to one of the preceding claims, **characterised in that** a flange (F) is formed in the region of a separating surface (6) on the outer surface (O) for securely fixing the shielding element (2) when the shielding element (2) is closed around the pipe section (R).

## Revendications

1. Dispositif de blindage (2) comprenant au moins deux pièces partielles (4,5) qui sont conçues pour être reliées l'une à l'autre en butée sur au moins une surface de séparation (6) afin d'entourer, dans un cas d'utilisation, une pièce tubulaire (R) de forme tridimensionnelle d'un conduit d'échappement (1) d'un moteur à combustion interne sur une longueur,
**caractérisé en ce que**
les pièces partielles (4,5) du dispositif de blindage (2) comprennent chacune au moins un système de chauffage électrique (3) dirigé thermiquement vers l'intérieur en direction de la pièce tubulaire (R) à entourer, dans une position de montage sur la pièce tubulaire (R) à entourer.

2. Dispositif de blindage selon la revendication précédente, **caractérisé en ce que** deux pièces partielles (4, 5) sont reliés entre eux par au moins une ligne de pliage (7).

3. Dispositif de blindage selon la revendication précédente, **caractérisé en ce que** la ligne de pliage (7) est réalisée sous forme de moulure en forme d'oméga.

4. Dispositif de blindage selon l'une des revendications précédentes, **caractérisé en ce que** le système de chauffage (3) est réalisé sous la forme d'au moins un conducteur résistif (8) isolé électriquement par rapport au tronçon de tube (R) et présentant un tracé en méandres s'étendant sur une longueur (L) dans le sens d'écoulement des gaz d'échappement.

5. Dispositif de blindage selon la revendication précédente, **caractérisé en ce que** le conducteur résistif (8) est pourvu d'une isolation électrique (9).

6. Dispositif de blindage selon la revendication précédente, **caractérisée en ce que** l'isolation électrique (9) du conducteur résistif (8) est réalisée sous la forme d'un tricot, d'un tissu, d'une tresse ou d'une corde.

7. Dispositif de blindage selon l'une des deux revendications précédentes, **caractérisée en ce que** pour l'isolation électrique (9) du conducteur résistif (8), on prévoit des fibres en verres, en silicates ou en un mélange de matériaux thermiques à haute performance pour une épaisseur d'environ 0,1 à environ 0,6 mm de la couche d'isolation.

8. Dispositif de blindage selon l'une des revendications précédentes, **caractérisé en ce que** le conducteur résistif (8) est conçu, conjointement avec une alimentation en énergie électrique raccordée, pour chauffer, à travers une isolation électrique (9), un tronçon de tuyau adjacent (R) faisant partie d'un conduit d'échappement, à une température d'environ 200° à plus de 550°C.

9. Dispositif de blindage selon l'une des revendications précédentes, **caractérisé en ce que** le système de chauffage (3) de la pièce partielle (4, 5) est fixé dans et/ou sur une isolation thermique (10) du dispositif de blindage (2).

10. Dispositif de blindage selon la revendication précédente, **caractérisé en ce que** la fixation du système de chauffage (3) dans et/ou sur une isolation thermique (10) de la pièce partielle (4, 5) du dispositif de blindage (2) est formée par couture, aiguilletage et/ou agrafage.

11. Dispositif de blindage selon l'une des revendications précédentes, **caractérisé en ce que** au moins une branche (Z) du système de chauffage électrique (3) est fixée dans l'une de plusieurs coques partielles reliées entre elles de manière articulée du dispositif de blindage.

12. Dispositif de blindage selon l'une des revendications précédentes, **caractérisé en ce que** plusieurs systèmes de chauffage (3) de la pièce partielle (4, 5) du dispositif de blindage (2) et/ou, à l'intérieur de chaque système de chauffage (3), un montage en cascade d'une puissance thermique respective par des systèmes de chauffage (3) pouvant être coupés et/ou des branches (Z) pouvant être coupées des systèmes de chauffage (3) est prévu.

13. Dispositif de blindage selon l'une des revendications précédentes, **caractérisé en ce que** des moyens de commutation et de régulation d'un flux de courant à travers le système de chauffage électrique (3) sont prévus pour régler une puissance de chauffage respective à délivrer.

14. Dispositif de blindage selon l'une des revendications précédentes, **caractérisé en ce que** dans la zone d'une surface de séparation (6), une bride (F) est formée sur la surface supérieure extérieure (O) pour la fixation sûre de la partie de blindage (2) dans l'état fermé du dispositif de blindage (2) autour de la pièce tubulaire (R) .
